Europäisches Patentamt

European Patent Office

Office européen des brevets

(19)

(11) Veröffentlichungsnummer: **0 014 781**

**A1**

(12) ## EUROPÄISCHE PATENTANMELDUNG

(21) Anmeldenummer: **79200776.7**

(22) Anmeldetag: **18.12.79**

(51) Int. Cl.³: **C 03 B 19/08**

(30) Priorität: **24.02.79 DE 2907363**

(43) Veröffentlichungstag der Anmeldung:
**03.09.80 Patentblatt 80/18**

(84) Benannte Vertragsstaaten:
**AT BE CH DE FR GB IT NL**

(71) Anmelder: **METALLGESELLSCHAFT AG**
**Reuterweg 14 Postfach 3724**
**D-6000 Frankfurt/M.1(DE)**

(72) Erfinder: **Schymura, Konrad, Dipl.-Ing.**
**Weilstrasse 5**
**D-6370 Oberursel(DE)**

(74) Vertreter: **Fischer, Ernst, Dr.**
**Reuterweg 14**
**D-6000 Frankfurt am Main 1(DE)**

(54) **Vorrichtung zur Herstellung von Schaumglas oder Schaumkeramik.**

(57) Ein Band von stirnseitig offenen und aneinanderstoßenden Formen 1 wird vor dem Einschub in einen Tunnelofen 5 mit Material beschickt und taktweise vorgeschoben. Jede Form 1 ist mit einem senkrechten Gehänge 2 an einer Laufkatze 3 befestigt, der Boden 10a, 10b ist nach unten und seitlich aufklappbar, die Laufkatzen 3 werden auf einen über dem Tunnelofen 5 angeordneten Schienenbahn 4 geführt, wobei das Gehänge 2 durch einen Spalt 6 in der Decke des Tunnelofens 5 geführt wird, jedes Gehänge 2 hat in Längsrichtung ein Distanzstück 7 von etwa Formlänge, und auf der Decke des Tunnelofens 5 ist eine bewegliche Abdichtung 8, 9 für den Spalt 6 angebracht. Nach Verlassen der Vorkühlstrecke 14 wird der Boden 10a, 10b der Formen 1 aufgeklappt, die Formen 1 werden von dem Schaumglasstrang 16 entfernt und auf einer Rückführbahn zur Beschickungsseite zurückgeführt. Die Vorschubeinrichtung 20, 23 greift in der Ebene der Distanzstücke 7 an.

.∕...

Fig.3

- 1 -    A 6604

METALLGESELLSCHAFT
Aktiengesellschaft
Reuterweg 14
6000 Frankfurt/M.

Frankfurt/M., 22. Februar 1979
Schr/HGa

Prov. Nr. 8392 LC

Vorrichtung zur Herstellung von
Schaumglas oder Schaumkeramik

Die Erfindung betrifft eine Vorrichtung zur Herstellung von Schaumglas oder Schaumkeramik, bestehend aus einem Tunnelofen mit angeschlossener Vorkühlstrecke, einem Band von stirnseitig offenen und aneinanderstoßenden Formen für das Material, einer vor dem Tunnelofen angeordneten Beschickungseinrichtung für das Material in die Formen sowie einer Vorschubeinrichtung für einen taktweisen Vorschub des Bandes der Formen, einer Vorrichtung zur Entfernung der Formen von dem Schaumglasband am Ende der Vorkühlstrecke, einer Trennvorrichtung zur Zerlegung des Schaumglasbandes in Blöcke, einer Nachkühlstrecke für die Schaumglasblöcke, und einer Rückführvorrichtung für die leeren Formen zur Beschickungsseite des Tunnelofens.

Die Herstellung von Schaumglas oder Schaumkeramik in Strangform erfolgt in der Weise, daß das zu verschäumende Material, im allgemeinen ein Gemisch aus Glaskörnern und Treibmitteln, in Form eines Bandes durch einen Tunnelofen geführt wird. Dabei wird das Material auf die zur Bildung des Schaumglases notwendige Temperatur, im allgemeinen etwa 800 bis 900 $^{O}$C, erhitzt und bildet einen zusammenhängenden Strang. Dieser wird auf die Temperatur vorgekühlt, etwa 500 $^{O}$C, bei welcher der Strang nicht mehr plastisch ist und bei welcher er in einzelne Blöcke aufgeteilt werden kann. Anschließend werden die Blöcke unter kontrollierten Bedingungen weiter abgekühlt.

Aus der DE-AS 13 01 009 ist es bekannt, je zwei planparallele Metallbänder horizontal und vertikal durch einen Muffelofen zu führen, wobei die Metallbänder die Form für das Material bilden. Das Material wird auf das untere horizontale Band chargiert und zwischen den mitlaufenden Bändern durch den Ofen geführt. Die starren Wände des Ofens stützen die Metallbänder ab und bewirken eine Parallelführung der Metallbänder. Zur Verringerung der Reibung und des Verschleißes ist eine Schmierung der Laufflächen der Bänder erforderlich. Der vorgekühlte Schaumglasstrang wird durch eine fliegende Säge in Blöcke geteilt. Bei dieser Vorrichtung kann ein Verschleiß an den Metallbändern und den Wänden des Ofens trotz der aufwendigen Schmierung nicht vermieden werden. Außerdem muß die Schmierung in der heißen Zone des Ofens erfolgen. Stahlbänder sind bei diesen Temperaturen praktisch nicht einsetzbar.

Aus L. M. Butt und W. W. Polljak "Technologie des Glases", 1960, S. 306-312 ist es bekannt, in einem Tunnelofen über Führungsschienen Blechformen zu schieben, wobei die aneinanderstoßenden Formen eine durchgehende Rinne bilden. Die Formen werden vor dem Einlauf in den Ofen mit dem Material gefüllt und taktweise in den Ofen und durch den Ofen

geschoben. Nach einer Vorkühlung werden die Formen abgesenkt und zur Beschickungsseite zurückgeführt. Der Strang aus Schaumglas wird in Blöcke zerteilt und die Blöcke werden fertiggekühlt. Bei dieser Arbeitsweise wirkt die gesamte Vorschubkraft auf die heißen Formen, wodurch die Gefahr der Verformung besteht. Dadurch entsteht ein ungleichmäßiger Strang und erhöhter Abfall und die Lebensdauer der Formen wird wesentlich verkürzt.

Der Erfindung liegt die Aufgabe zugrunde, eine Vorrichtung zu schaffen, die einen einwandfreien Schaumglasstrang mit wenig Abfall erzeugt, und bei der ein Verschleiß der Formen weitgehend vermieden wird.

Die Lösung dieser Aufgabe erfolgt erfindungsgemäß dadurch, daß jede Form mit einem senkrechten Gehänge an einer Laufkatze befestigt ist, der Boden der Form nach unten und seitlich aufklappbar ausgebildet ist, die Laufkatzen auf einer über dem Tunnelofen angeordneten Schienenbahn geführt werden, in der Decke des Tunnelofens ein Spalt zur Durchführung der senkrechten Gehänge angeordnet ist, an jedem senkrechten Gehänge in Längsrichtung der Form ein Distanzstück von etwa Formlänge angeordnet ist, auf der Decke des Tunnelofens eine bewegliche Abdichtung zur Abdichtung des Spaltes angeordnet ist, der Boden der Formen nach der Vorkühlstrecke aufgeklappt wird, die Formen von dem Schaumglasband entfernt und auf einer Rückführbahn zur Beschickungsseite zurückgeführt werden, und die Vorschubeinrichtung in der Ebene der Distanzstücke angreifend angeordnet ist. Die Länge der Distanzstücke kann so gewählt werden, daß ihre Länge der Länge der Formen beim Einlauf in den Tunnelofen entspricht, wobei das Gehänge mit Gelenkpunkten oder als flexibles Gehänge ausgebildet ist, wodurch es sich entsprechend der Längenausdehnung der Formen im Ofen verschieben kann. Die Länge der Distanzstücke kann auch etwas länger sein als die Länge der Formen, so daß bei Betriebstemperatur im Ofen beide Längen etwa gleich werden. Dann kann das Gehänge starr ausgebildet sein. Der Spalt zwischen den Formen beim Einlauf wird dann so gewählt, daß er kleiner ist als die Korngröße des Materials. Die Formen können rechteckig, vieleckig, rund, oval, halbschalenförmig usw. ausgestaltet sein.

Eine vorzugsweise Ausgestaltung besteht darin, daß die Beschickungseinrichtung vor- und zurückfahrbar angeordnet und beim Vorfahren als Vorschubeinrichtung ausgebildet ist und nach dem Vorschub beim Rückwärtsfahren das Material in die letzte Form chargiert. Dadurch ist keine zusätzliche Vorschubeinrichtung notwendig. Die Chargierung des Materials in die jeweils letzte Form erfolgt zweckmäßigerweise mittels eines Wuchtförderers, der in die Form hineinragt und beim Rückwärtsfahren langsam herausgezogen wird.

Eine vorzugsweise Ausgestaltung besteht darin, daß die Distanzstücke U-förmig ausgebildet sind und jeder Schenkel auf einer Seite neben dem Spalt auf der Decke des Tunnelofens in einer Sandtasse als Dichtung angeordnet ist. Dadurch wird eine gute Stabilität der Distanzstücke erzielt, und gleichzeitig dienen die Distanzstücke als Teil der Dichtung.

Eine vorzugsweise Ausgestaltung besteht darin, daß der Boden der Formen in Längsrichtung in der Mitte geteilt ist, jede Bodenhälfte mit der Seitenwand der Form klappbar angeordnet ist und mit Gegengewichten für den geschlossenen Zustand ausgerüstet ist. Dadurch ergibt sich eine kurze Klapphöhe beim Öffnen der Formen sowie eine symmetrische Belastung des Gehänges. Die Öffnung der Formen erfolgt zweckmäßigerweise in der Art, daß der Öffnungsvorgang durch einen unterhalb des Schaumglasstranges angeordneten Keil eingeleitet wird, der den Strang sofort unterstützt. Das weitere Öffnen erfolgt durch seitliche Führungsschienen oder Führungsrollen.

Eine vorzugsweise Ausgestaltung besteht darin, daß die Schienenbahn für die Laufkatzen nach der Vorkühlstrecke im Bereich des Aufklappens des Bodens der Formen ansteigend angeordnet ist. Dadurch wird ein weites Aufklappen der Formen erspart. Die Formen werden nach der Vorkühlstrecke von einer Transportvorrichtung erfaßt und mit größerer Geschwindigkeit als der Geschwindigkeit des Vorschubs weitertransportiert.

Eine vorzugsweise Ausgestaltung besteht darin, daß die Rückführbahn neben und parallel zur Ofenlängsachse angeordnet, mit der Schienenbahn über dem Ofen durch Kurvenschienen verbunden, mit einer kontinuierlich und schneller als der Vorschub laufenden Transportvorrichtung ausgebildet, und am Anfang der Rückführbahn eine Reinigungs- und Ausspritzstation für die Formen angeordnet ist. Dadurch ist eine einfache Rückführung und Reinigung sowie Ausspritzen der Formen möglich.

Die Erfindung wird an Hand der Figuren näher und schematisch erkäutert.

Es zeigen

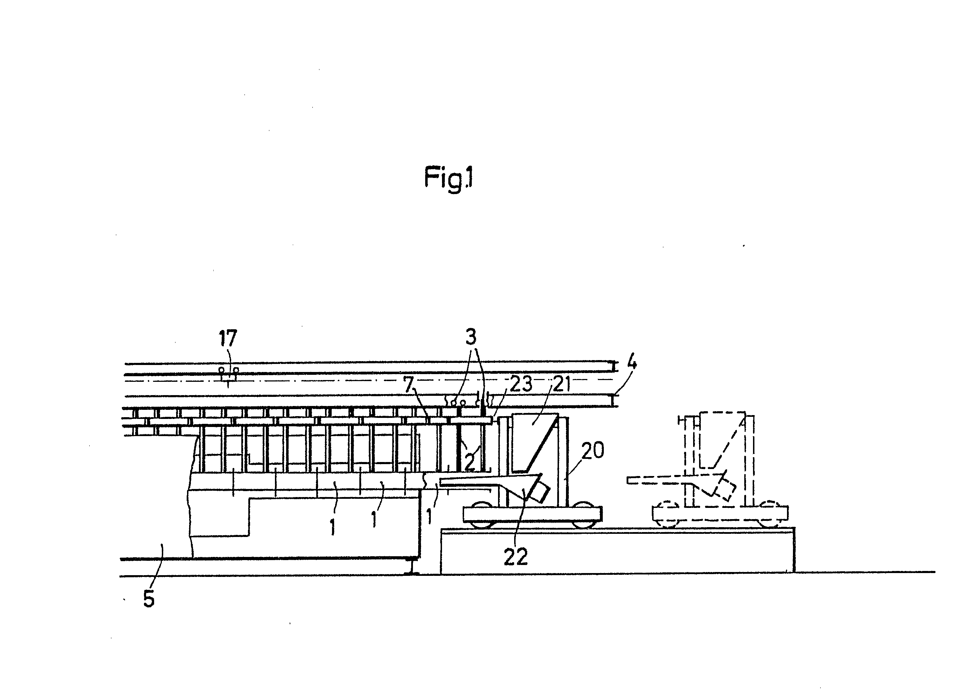

Fig. 1  eine Seitenansicht des Beschickungsendes eines Tunnelofens in teilweisem Schnitt;

Fig. 2  eine Seitenansicht des Endes des Tunnelofens mit der Vorkühlstrecke und der Entfernung der Formen von dem Schaumglasband;

Fig. 3  einen Querschnitt durch den Tunnelofen.

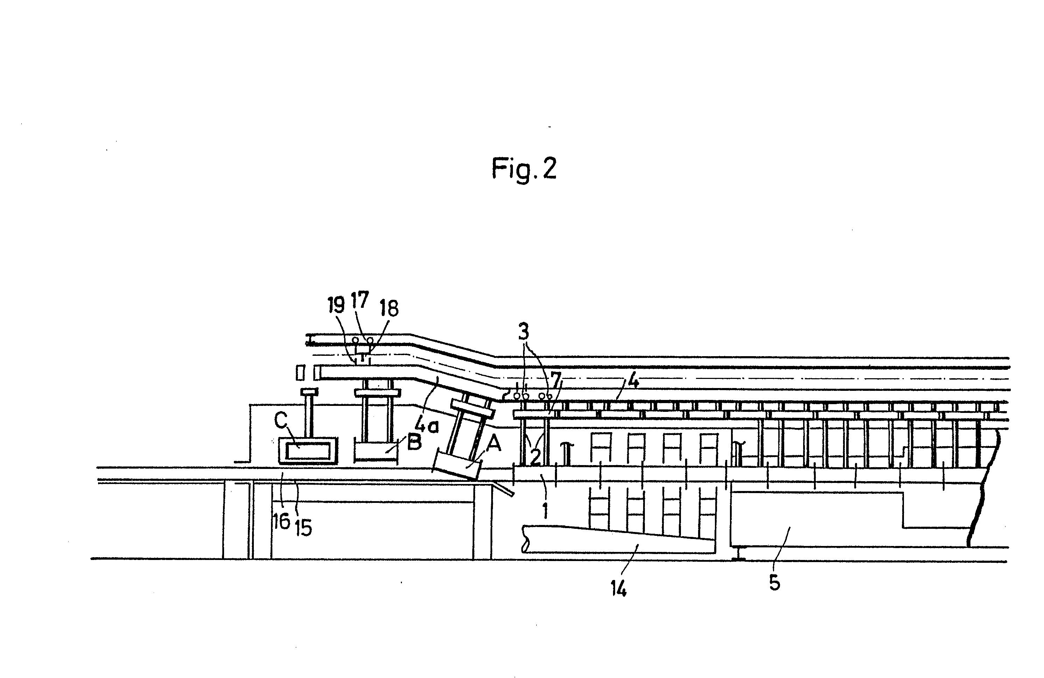

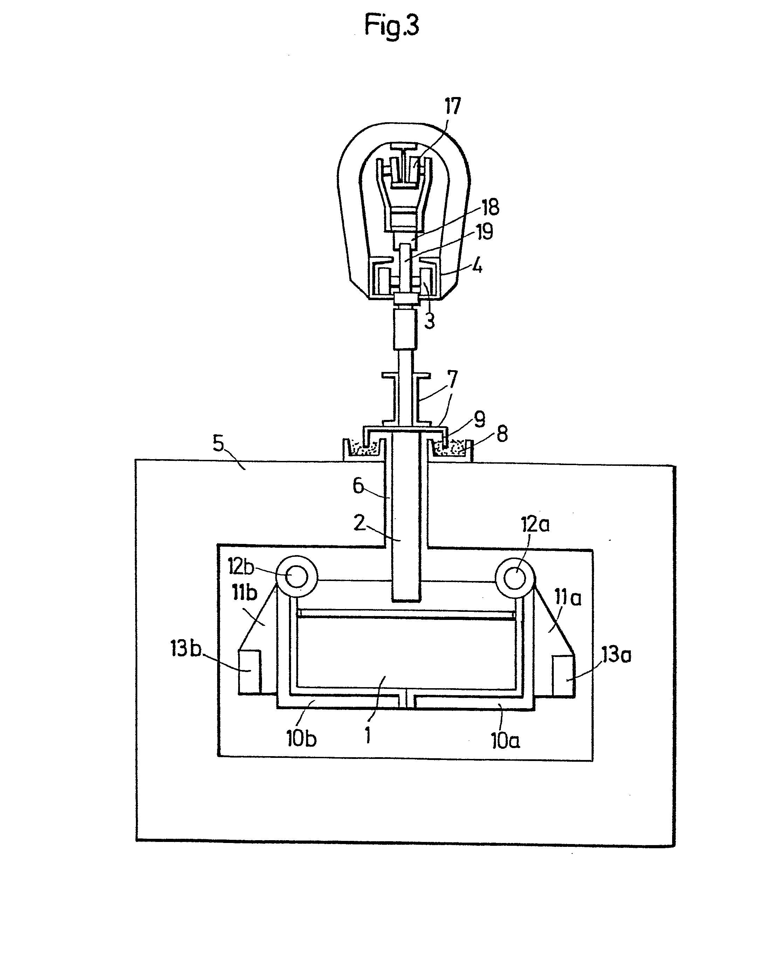

Jede Form 1 ist an einem senkrechten Gehänge 2 befestigt, das an der Laufkatze 3 befestigt ist. Die Laufkatze 3 wird auf einer Schienenbahn 4 geführt, die in der Mitte über dem Tunnelofen 5 angeordnet ist. In der Decke des Tunnelofens 5 ist in der Mitte ein Spalt 6 zur Durchführung des Gehänges 2 angebracht. An dem Gehänge 2 ist ein U-förmiges Distanzstück 7 parallel zur Form 1 in Längsrichtung der Form 1 angebracht, das etwa die Länge der Form 1 hat und oberhalb des Tunnelofens 5 liegt. Auf der Decke des Tunnelofens 5 ist zu jeder Seite des Spaltes 6 eine Sandtasse 8 angeordnet, in welche je ein Schenkel 9 des U-förmigen Distanzstückes 7 eintaucht und dadurch den Spalt 6 abdichtet. Der Boden der Form 1 ist in der Mitte geteilt und besteht aus den beiden Bodenhälften 10a und 10b (Fig. 3), die mit den Seitenwänden 11a und 11b verbunden und seitlich um die Drehpunkte 12a und 12b hochklappbar sind. An den Seitenwänden 11a und 11b sind Gegengewichte 13a und 13b angebracht, welche die Bodenhälften 10a und 10b in geschlossenem Zustand halten. Nach Verlassen des Tunnelofens 5 (Fig. 2) durchlaufen die Formen 1 eine Vorkühlstrecke 14, in der das Schaumglasband 16 in den Formen 1 gekühlt wird. Am Ende der Vorkühlstrecke 14 werden die Bodenhälften 10a und 10b mit den Seitenwänden 11a und 11b seitlich aufgeklappt. Dies geschieht zunächst durch einen Keil, der die vordere Kante der Auflage 15 für den Schaumglasstrang 16 nach Entfernung der Formen 1 bildet. Dieser Keil greift in die Trennstelle der Bodenhälften 10a und 10b ein, öffnet die Bodenhälften 10a und 10b und unterstützt beim Öffnen sofort den Schaumglasstrang 16. Das weitere Öffnen der Formen 1 erfolgt mittels seitlicher Führungsschienen oder Rollen, welche die Bodenhälften 10a und 10b sowie die Seitenteile 11a und 11b weiter aufklappen. Mit Beginn des Öffnens der Formen 1 ist die Schienenbahn 4a ansteigend angeordnet. Die Formen 1 werden hier von einer kontinuierlich umlaufenden Transportvorrichtung 17 erfaßt, die mit größerer Geschwindigkeit umläuft als die Vorschubgeschwindigkeit der Formen 1 im Tunnelofen 5 ist. Die Transportvorrichtung 17 besteht aus einem sog. Power and Free-Förderer, dessen Mitnehmer 18 in eine Haltevorrichtung 19 an der Katze 3 einklinkt. Die Form 1 wird in geöffneter Stellung hochgezogen (Position A in Fig. 2),

- 7 -

der Boden wird geschlossen (Position B), die Form wird in eine Kurvenschiene gezogen (Position C) und auf der Rückführbahn zur Beschickungsseite zurückgeführt. Am Anfang der Rückführbahn ist die Reinigungs- und Ausspritzstation angeordnet. Die Beschickungseinrichtung 20 ist vor- und zurückfahrbar ausgebildet und besteht aus einem Fahrgestell mit Bunker 21 und Wuchtförderer 22. Beim Vorfahren dient die Beschickungseinrichtung 20 gleichzeitig als Vorschubeinrichtung. Zu diesem Zweck ist sie in der Ebene der Distanzstücke 7 mit einem Querbalken 23 ausgerüstet, der gegen das Distanzstück 7 der letzten Form 1 stößt und so das Band der Formen 1 im Tunnelofen 5 taktweise vorschiebt. Beim Rückwärtsfahren wird der Wuchtförderer 22 in Betrieb gesetzt und dadurch die letzte Form 1 beschickt.

Die Vorteile der Erfindung bestehen darin, daß die heißen Formen mechanisch kaum beansprucht werden, dadurch keine Verformung entsteht, der Schaumglasstrang eine einwandfreie Beschaffenheit hat, wenig Abfall entsteht, die Formen praktisch nicht verschleißen und sich leicht vom Schaumglasstrang trennen lassen.

P a t e n t a n s p r ü c h e

1. Vorrichtung zur Herstellung von Schaumglas oder Schaumkeramik, bestehend aus einem Tunnelofen (5) mit angeschlossener Vorkühlstrecke, einem Band von stirnseitig offenen und aneinanderstoßenden Formen (1) für das Material, einer vor dem Tunnelofen (5) angeordneten Beschickungseinrichtung (22) für das Material in die Formen (1) sowie einer Vorschubeinrichtung (23) für einen taktweisen Vorschub des Bandes der Formen (1), einer Vorrichtung zur Entfernung der Formen von dem Schaumglasband (16) am Ende der Vorkühlstrecke (14), einer Trennvorrichtung zur Zerlegung des Schaumglasbandes (16) in Blöcke, einer Nachkühlstrecke für die Schaumglasblöcke, und einer Rückführvorrichtung für die leeren Formen (1) zur Beschickungsseite des Tunnelofens (5), dadurch gekennzeichnet, daß jede Form (1) mit einem senkrechten Gehänge (2) an einer Laufkatze (3) befestigt ist, der Boden (10a, 10b) der Form (1) nach unten und seitlich aufklappbar ausgebildet ist, die Laufkatzen (3) auf einer über dem Tunnelofen (5) angeordneten Schienenbahn (4) geführt werden, in der Decke des Tunnelofens (5) ein Spalt (6) zur Durchführung der senkrechten Gehänge (2) angeordnet ist, an jedem senkrechten Gehänge (2) in Längsrichtung der Form (1) ein Distanzstück (7) von etwa Formlänge angeordnet ist, auf der Decke des Tunnelofens (5) eine bewegliche Abdichtung (8, 9) zur Abdichtung des Spaltes (6) angeordnet ist, der Boden (10a, 10b) der Formen (1) nach der Vorkühlstrecke (14) aufgeklappt wird, die Formen (1) vor dem Schaumglasband (16) entfernt und auf einer Rückführbahn zur Beschickungsseite zurückgeführt werden, und die Vorschubeinrichtung (23) in der Ebene der Distanzstücke (7) angreifend angeordnet ist.

2. Vorrichtung nach Anspruch 1, dadurch gekennzeichnet, daß die Beschickungseinrichtung (20, 22) vor- und zurückfahrbar angeordnet und beim Vorfahren als Vorschubeinrichtung (20, 23) ausgebildet ist, und nach dem Vorschub beim Rückwärtsfahren das Material in die letzte Form (1) chargiert.

3. Vorrichtung nach Anspruch 1 oder 2, dadurch gekennzeichnet, daß die Distanzstücke (7) U-förmig ausgebildet sind und jeder Schenkel (9) auf einer Seite neben dem Spalt (6) auf der Decke des Tunnelofens (5) in einer Sandtasse (8) als Dichtung angeordnet ist.

4. Vorrichtung nach einem der Ansprüche 1 bis 3, dadurch gekennzeichnet, daß der Boden (10a, 10b) der Formen (1) in Längsrichtung in der Mitte geteilt ist, jede Bodenhälfte (10a, 10b) mit der Seitenwand (11a, 11b) der Form (1) klappbar angeordnet ist und mit Gegengewichten (13a, 13b) für den geschlossenen Zustand ausgerüstet ist.

5. Vorrichtung nach einem der Ansprüche 1 bis 4, dadurch gekennzeichnet, daß die Schienenbahn (4a) für die Laufkatzen (3) nach der Vorkühlstrecke (14) im Bereich des Aufklappens des Bodens (10a, 10b) der Formen (1) ansteigend angeordnet ist.

6. Vorrichtung nach einem der Ansprüche 1 bis 5, dadurch gekennzeichnet, daß die Rückführbahn neben und parallel zur Ofenlängsachse angeordnet, mit der Schienenbahn (4) über dem Ofen (5) durch Kurvenschienen verbunden, mit einer kontinuierlich und schneller als der Vorschub laufenden Transportvorrichtung (17) ausgebildet, und am Anfang der Rückführbahn eine Reinigungs- und Ausspritzstation für die Formen (1) angeordnet ist.

Fig.1

Fig. 2

## Fig.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | FR - A - 818 606 (SAINT-GOBAIN) | |
| A | DE - B - 1 227 205 (SYNFIBRIT) | |
| A | FR - A - 1 565 887 (STATNI VYZKUMNY USTAV SKLARSKE TECHNIKY) | |
| A | FR - A - 1 278 522 (AKTIESELSKABET JENS VILLADSENS FABRIKER) | |

----

**KLASSIFIKATION DER ANMELDUNG (Int.Cl. ³)**

C 03 B 19/08

**RECHERCHIERTE SACHGEBIETE (Int. Cl. ³)**

C 03 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsatze

E: kollidierende Anmeldung

D: in der Anmeldung angeführtes Dokument

L: aus andern Grunden angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-05-1980 | COLPAERT |

EPA form 1503.1 06.78